(19) Europäisches Patentamt / European Patent Office / Office européen des brevets

(11) **EP 2 253 596 B1**

(12) **EUROPEAN PATENT SPECIFICATION**

(45) Date of publication and mention
of the grant of the patent:
**13.02.2013 Bulletin 2013/07**

(51) Int Cl.:
**C02F 3/12** (2006.01)          **C02F 3/30** (2006.01)
**C02F 3/34** (2006.01)

(21) Application number: **10162900.4**

(22) Date of filing: **16.05.2010**

(54) **Method for removing phosphorus by gasification using a membrane bioreactor**

Verfahren zur Phosphorelimination durch Gasbildung in einem Membranbioreaktors

Procédé d'élimination de phosphore par formation de gaz dans un bioréacteur à membrane

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **15.05.2009 CN 200910115350**

(43) Date of publication of application:
**24.11.2010 Bulletin 2010/47**

(73) Proprietor: **Jiangxi JDL Environmental Protection Co., Ltd.
Changleng Overseas Investment Zone (First Zone)
Xinjian, Nanchang
Jiangxi 330100 (CN)**

(72) Inventors:
• **LIAO, Zhimin**
  330100, Nanchang (CN)
• **XIONG, Jianzhong**
  330100, Nanchang (CN)
• **YANG, Shengyun**
  330100, Nanchang (CN)
• **ZHOU, Jialin**
  330100, Nanchang (CN)
• **HE, Lingyun**
  330100, Nanchang (CN)
• **WAN, Aiguo**
  330100, Nanchang (CN)
• **JU, Dejin**
  330100, Nanchang (CN)
• **YUAN, Zhihua**
  330100, Nanchang (CN)
• **CAO, Jiejun**
  330100, Nanchang (CN)
• **TAO, Kun**
  330100, Nanchang (CN)

(74) Representative: **Hryszkiewicz, Danuta
Kancelaria Patentowa
Matthias Scholl, Inc.
Ul. Jana z Kolna 38
75-204 Koszalin (PL)**

(56) References cited:
EP-A1- 1 734 011          WO-A1-00/37369
WO-A1-2007/055440      US-A1- 2006 249 449

• CHAE ET AL: "Characteristics of simultaneous organic and nutrient removal in a pilot-scale vertical submerged membrane bioreactor (VSMBR) treating municipal wastewater at various temperatures" PROCESS BIOCHEMISTRY, ELSEVIER, NL LNKD- DOI: 10.1016/J.PROCBIO.2006.07.033, vol. 42, no. 2, 19 January 2007 (2007-01-19), pages 193-198, XP005836354 ISSN: 1359-5113
• DING L ET AL: "Effect of pH on phosphine production and the fate of phosphorus during anaerobic process with granular sludge" CHEMOSPHERE, PERGAMON PRESS, OXFORD, GB LNKD- DOI:10.1016/J.CHEMOSPHERE. 2004.10.015, vol. 59, no. 1, 1 March 2005 (2005-03-01), pages 49-54, XP004736164 ISSN: 0045-6535
• LIU Z ET AL: "Preliminary investigation on the role of microorganisms in the production of phosphine" JOURNAL OF ENVIRONMENTAL SCIENCES,, vol. 20, no. 7, 1 January 2008 (2008-01-01), pages 885-890, XP022939222 ISSN: 1001-0742 [retrieved on 2008-01-01]

## Description

The invention relates to a method for removing phosphorus, and more particularly to a method for removing phosphorus using a membrane bioreactor and without sludge discharge.

Conventional methods of phosphorus removal mainly focus on a biochemical process which requires a combination of a facultative aerobic condition and an aerobic condition. Under an aerobic condition, phosphorus-accumulating microorganisms in the sludge absorb phosphorus in a large amount. Subsequently, the sludge flows to an anaerobic zone or a facultative aerobic zone where the absorbed phosphorus is released, and then part of sludge is discharged so as to remove phosphorus from the sewage treatment system.

From Chae et al "Characteristics of simultaneous organic and nutrient removal in a pilot-scale vertical submerged membrane bioreactor (VSMBR) treating municipal wastewater at various temperatures", Process Biochemistry, Elsevier, NL, vol 42, no. 2, 2007, pp. 193-194, known is that a pilot-scale VSMBR is separated into an anoxic zone and an oxic zone and the oxic zone is separated from the anoxic zone by a horizontal plate.

From WO 00/37369 A1 known are a method for removal of ammonia and total nitrogen and a membrane bioreactor within which the primary aerobic and the primary anoxic zones in the tank become larger and smaller relative to each other as time such that anoxic and aerobic conditions are alternately occurred.

From EP 1734011 A1 known is a method of improving flux in a membrane bioreactor of which the influent has a concentration of salts of inorganic oxides sufficient to cause scaling or inorganic fouling conditions by adding an effective amount of one or more cationic, amphoteric or zwitterionic polymers, or a combination thereof to the membrane bioreactor, wherein the membrane bioreactor may comprise one or more aerobic reactors, may comprise one or more anaerobic digesters, and may comprise a combination of at least of two of the following reactors: anaerobic, anoxic, and aerobic reactors.

From WO 2007/055440 A1 known are a membrane coupled activated sludge method and apparatus operating anoxic/anaerobic processes alternately for removal of nitrogen and phosphorous, wherein the anoxic/anaerobic processes are alternately repeated with an intermittent operation of an internal circulation pump to remove the nitrogen under anoxic condition and to release the phosphorus under anaerobic condition; the apparatus comprises a front anoxic/anaerobic alternating-type reactor and a rear aerobic reactor; and the sludge is wasted to release phosphorus.

From Ding et al. "Effect of pH on phosphine production and the fate of phosphorus during anaerobic process with granular sludge" Chemosphere, Pergamon Press, GB, vol. 59, no. 1, 2005, pp. 49-54, and Liu et al. "Preliminary investigation on the role of microorganisms in the production of phosphine" Journal of Environmental Sciences, vol. 20, no. 7, 2008, pp. 885-890, known are bacteria participating in generating phosphine.

The method for removing phosphorus is based on the sludge discharge from the system, so it has the following disadvantages:

1. To remove phosphorus, a large amount of sludge needs to be discharged, but currently the sludge discharged by municipal wastewater treatment plant can be only about 2% of the total sewage treatment capacity, how to deal with the remaining sludge remains a difficult problem; and

2. The method requires a combination of a facultative aerobic zone and an aerobic zone which are generally distributed separately; therefore, the process is complicated, occupies a large area, and is difficult from the standpoint of maintenance.

Accordingly, in view of the above-described problems, it is one objective of the invention to provide a method for removing phosphorus that need not discharge sludge and occupies a small area.

To achieve the above objectives, in accordance with one embodiment of the invention, there is provided a method for removing phosphorus, the method comprising

a) providing a membrane bioreactor comprising a membrane module having a lower part;

b) aerating intensively the lower part of the membrane module while controlling dissolved oxygen concentration around the membrane module at more than 2 mg/L and dissolved oxygen concentration in the rest zone at less than 1 mg/L so as to form an aerobic zone, a facultative aerobic zone, and an anaerobic zone; and

c) introducing sludge having a concentration of between 10,000 mg/L and 30,000 mg/L and having an organic loading of between 0.08 and 0.07 Kg (COD)/(Kg (MLSS) •d) into the membrane reactor so that phosphorus is absorbed in the aerobic zone, released in the facultative aerobic zone, and reduced by phosphine-reducing bacteria into phosphine.

In a class of this embodiment, the aerobic zone is about less than one third by volume of the whole reaction zone of the membrane bioreactor, and the rest is the facultative aerobic zone or the anaerobic zone.

In a class of this embodiment, the aeration is in a manner of blower aeration or jet aeration with a gas-water ratio of less than 19:1.

Upon aeration, the sludge flows circularly along the aerobic zone, the facultative aerobic zone, and the anaerobic zone, which provides a biochemical reaction environment of phosphorus absorption at aerobic zone, phosphorus release at facultative aerobic zone, and phosphorus removal by gasification process at anaerobic zone. The proliferation and self-digestion of the sludge can maintain in a dynamic equilibrium, so no sludge needs to be discharged.

In a class of this embodiment, phosphine-reducing bacteria in the sludge are filtered by a membrane material having a pore size of between 0.01 and 10 μm and retain in the membrane bioreactor.

In embodiment of the invention, inorganic phosphorus is firstly transformed into organic phosphorus by microorganisms for cell' synthesis. The organic phosphorus is reduced by phosphine-reducing bacteria and transformed into phosphine in the anaerobic zone. The phosphine is treated by an aeration system.

Advantages of the invention are summarized as below. In embodiment of the invention, the aeration intensity is concentrated on the lower part of the membrane module, so an aerobic zone is formed, which provides a biochemical reaction condition for phosphorus absorption and cell synthesis. Subsequently, the sludge flows to the upper part of the membrane module where dissolved oxygen is little and phosphorus is released. By the filtration of the membrane module, the phosphine-reducing bacteria are accumulated and multiply in the bioreactor, which prompts the phosphorus removal of gasification process and no sludge discharged.

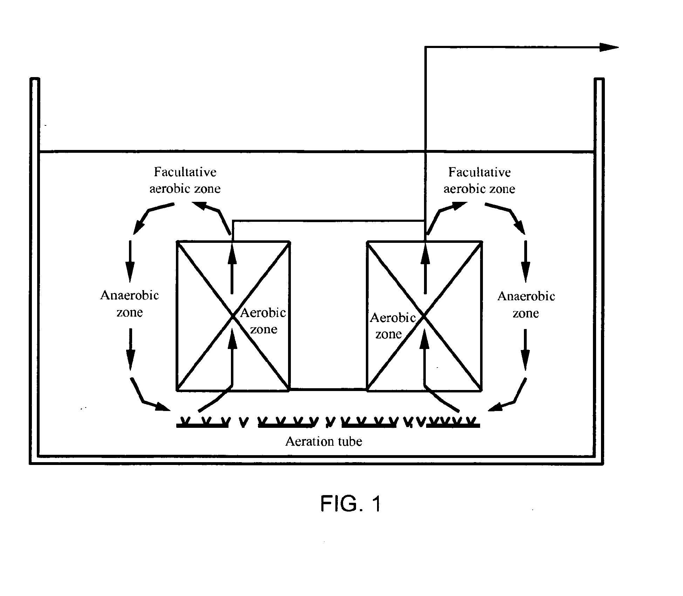

FIG. 1 is a schematic diagram of phosphorus removal by gasification process in a membrane bioreactor according to one embodiment of the invention.

In a membrane bioreactor comprising a membrane module having a lower part, the lower part of the membrane module is aerated intensively, and the dissolved oxygen concentration around the membrane module is more than 2 mg/L and a dissolved oxygen concentration in the rest zone less than 1 mg/L. Thus, an aerobic zone, a facultative aerobic zone, and an anaerobic zone are formed respectively (as shown in FIG. 1), which provides a biochemical reaction environment of phosphorus absorption at aerobic zone and phosphorus release at anaerobic zone. Since the dissolved oxygen is utilized quickly by the aerobic microorganisms, the upper part of the membrane module is a facultative aerobic zone or even an anaerobic zone. When the sludge flows to the upper part of the membrane module, phosphorus is released. Sludge having a concentration of between 10,000 mg/L and 30,000 mg/L and having an organic loading of between 0.08 and 0.07 Kg (COD)/(Kg (MLSS) •d) is introduced into the membrane reactor so as to accelerate the digestion of the sludge and maintain a dynamic equilibrium of the proliferation and self-digestion of the sludge. When microorganisms decompose due to endogenous respiration, the degradation of amino acid produces phospholipids having C-P bond. When phosphine-reducing bacteria process phospholipids, C-P bond breaks up, and phosphine is produced.

Using filtration at the membrane module, the phosphine-reducing bacteria are accumulated and multiply in the bioreactor, which provides conditions for phosphorus removal of gasification. The following is the process of the biochemical reaction: Organic compound (Carbon source) + $PO_4{}^{3-}$ $\xrightarrow{\text{synthesis}}$ synthesis Cell r

educing bacteria $\xrightarrow{\text{reducing bacteria}}$ educing bacteria $PH_3$

Thus, the invention provides a novel method for removing phosphorus by gasification process, no need to discharge sludge.

Example 1

In a sewage treatment plant, the daily sewage treatment is 80 $m^3$/d. The membrane bioreactor is facultative aerobic, and the treatment process adopts the method of the invention, involving in no sludge discharge. The TP concentration of the sewage is monitored, and the effect of phosphorus removal is as follows.

The mean value of total phosphorus of influent is 2.82 mg/L, and that of effluent is 0.84 mg/L, the mean value of phosphorus removal is 1.98 mg/L. The total phosphorus content in the sludge is between 1.22% and 1.69%, with mean value of 1.49%. This is equivalent to phosphorus removal by a conventional biochemical process, and phosphorus is not accumulated in the sludge. Although no sludge discharged, the total phosphorus loss reaches 70%. Monitoring the gas at the top of the treatment system shows the phosphine content is between 1 and 3 ppm, which is much higher than that in the air (0 ppm). Thus, without sludge discharge, the phosphorus is successfully removed using a gasification process.

Claims

1.  A method for removing phosphorus by gasification comprising

    a) providing a membrane bioreactor comprising a membrane module having a lower part;
    b) aerating intensively said lower part of said membrane module while controlling dissolved oxygen concentration around said membrane module at more than 2 mg/L to form an aerobic zone in said lower part and controlling dissolved oxygen concentration in the rest zone less than 1 mg/L so as to form a facultative aerobic zone or an anaerobic zone; and
    c) introducing sludge having a concentration of between 10,000 mg/L and 30,000 mg/L and having an organic loading of between 0.08 and 0.07 Kg (COD)/(Kg (MLSS) •d) into said membrane bioreactor so that phosphorus is absorbed in said aerobic zone, released in said facultative aerobic zone or said anaerobic zone, and reduced by phosphine-reducing bacteria into phosphine in said facultative aerobic zone or said anaerobic zone, whereby phosphorus is removed in form of phosphine without discharging the sludge.

**2.** The method of claim 1, **characterized in that** said aerobic zone is less than one third by volume of the whole reaction zone of said membrane bioreactor, and the rest is the facultative aerobic zone or the anaerobic zone.

**3.** The method of claim 1, **characterized in that** said aeration is in a manner of blower aeration or jet aeration with a gas-water ratio of less than 19:1.

**4.** The method of claim 1, **characterized in that** said phosphine-reducing bacteria in the sludge are filtered by a membrane material having a pore size of between 0.01 and 10 $\mu$m and retain in said membrane bioreactor.

**Patentansprüche**

**1.** Verfahren zum Entfernen von Phosphor durch Vergasung, umfassend

a) Bereitstellung eines Membranbioreaktors, umfassend ein Membranmodul mit einem unteren Teil;
b) intensives Belüften des unteren Teils des Membranmoduls, während die Konzentration von gelöstem Sauerstoff um das Membranmodul herum bei mehr als 2 mg/l reguliert wird, um in dem unteren Teil eine aerobe Zone zu bilden, und die Konzentration von gelöstem Sauerstoff in der Restzone auf weniger als 1 mg/l reguliert wird, um eine fakultative aerobe Zone oder eine anaerobe Zone zu bilden; und
c) derart Einführen von Schlämme mit einer Konzentration zwischen 10.000 mg/l und 30.000 mg/l und einer organischen Ladung zwischen 0,08 und 0,07 kg (COD)/(kg (MLSS)•d) in den Membranbioreaktor, dass in der aeroben Zone Phosphor absorbiert wird, in der fakultativen aeroben Zone oder der anaeroben Zone freigesetzt wird und in der fakultativen aeroben Zone oder der anaeroben Zone von Phosphin-reduzierenden Bakterien zu Phosphin reduziert wird, wobei Phosphor in Form von Phosphin entfernt wird, ohne die Schlämme abzulassen.

**2.** Verfahren nach Anspruch 1, **dadurch gekennzeichnet, dass** die aerobe Zone nach Volumen weniger als ein Drittel der gesamten Reaktionszone des Membranbioreaktors beträgt und der Rest aus der fakultativen aeroben Zone oder der anaeroben Zone besteht.

**3.** Verfahren nach Anspruch 1, **dadurch gekennzeichnet, dass** die Belüftung auf eine Weise der Gebläsebelüftung oder Düsenbelüftung mit einem Gas-Wasser-Verhältnis von weniger als 19:1 erfolgt.

**4.** Verfahren nach Anspruch 1, **dadurch gekennzeichnet, dass** die Phosphin-reduzierenden Bakterien in der Schlämme mit einem Membranmaterial mit einer Porengröße zwischen 0,01 und 10 $\mu$m gefiltert werden und in dem Membranbioreaktor bleiben.

**Revendications**

**1.** Procédé pour éliminer du phosphore par gazéification comprenant les étapes consistant à :

a) fournir un bioréacteur à membrane comprenant un module à membrane possédant une partie inférieure ;
b) aérer de façon intensive ladite partie inférieure dudit module à membrane tout en contrôlant la concentration d'oxygène dissous autour dudit module à membrane à plus de 2 mg/l pour former une zone aérobie dans ladite partie inférieure et en contrôlant la concentration d'oxygène dissous dans la zone restante inférieure à 1 mg/l afin de former une zone aérobie facultative ou une zone anaérobie ; et
c) introduire une boue possédant une concentration comprise entre 10 000 mg/l et 30 000 mg/l et possédant une charge organique comprise entre 0,08 et 0,07 kg (COD)/(kg (MLSS) •d) dans ledit bioréacteur à membrane de sorte que le phosphore est absorbé dans ladite zone aérobie, libéré dans ladite zone aérobie facultative, ou ladite zone anaérobie, et réduit en phosphine par des bactéries de réduction en phosphine dans ladite zone aérobie facultative ou ladite zone anaérobie, ce par quoi le phosphore est éliminé sous la forme de phosphine sans libérer la boue.

**2.** Procédé selon la revendication 1, **caractérisé en ce que** le volume de la zone aérobie est de moins d'un tiers de la zone réactionnelle totale dudit bioréacteur à membrane, et le reste est la zone aérobie facultative ou la zone anaérobie.

**3.** Procédé selon la revendication 1, **caractérisé en ce que** ladite aération est sous forme d'une aération par soufflerie ou une aération par jet avec un rapport gaz - eau inférieur à 19 : 1.

**4.** Procédé selon la revendication 1, **caractérisé en ce que** lesdites bactéries de réduction en phosphine dans la boue sont filtrées par un matériau à membrane possédant une taille de pore comprise entre 0,01 et 10 $\mu$m et sont retenues dans ledit bioréacteur à membrane.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0037369 A1
- EP 1734011 A1
- WO 2007055440 A1

**Non-patent literature cited in the description**

- Characteristics of simultaneous organic and nutrient removal in a pilot-scale vertical submerged membrane bioreactor (VSMBR) treating municipal wastewater at various temperatures. **CHAE et al.** Process Biochemistry. Elsevier, 2007, vol. 42, 193-194
- Effect of pH on phosphine production and the fate of phosphorus during anaerobic process with granular sludge. **DING et al.** Chemosphere. Pergamon Press, 2005, vol. 59, 49-54
- **LIU et al.** Preliminary investigation on the role of microorganisms in the production of phosphine. *Journal of Environmental Sciences,* 2008, vol. 20 (7), 885-890